# EUROPEAN PATENT APPLICATION

(11) **EP 4 429 351 A1**
(43) Date of publication of application: **11.09.2024**
(21) Application number: 21962792.4
(22) Date of filing: 02.11.2021
(51) Int. Cl.: H04W 72/04

(54) **BWP DETERMINATION METHOD AND DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/128202
(87) International publication number: WO 2023/077271

(57) **Abstract**

The present invention relates to a BWP determination method and device, and a storage medium. The BWP determination method is applied to a terminal, and includes: determining a monitoring occasion of a first BWP, the first BWP being configured on the basis of a system information block; and monitoring the first BWP on the basis of the monitoring occasion. According to the present invention, a monitoring occasion of a BWP configured on the basis of a system information block can be determined.

## Description

### FIELD

The present invention relates to the technical field of communication technologies, and in particular to a method and device for determining a bandwidth part (BWP), and a storage medium.

### BACKGROUND

In the related art, two technologies, machine type communication (MTC) and narrowband Internet of Things (NB-IoT), have been provided for IoT services. The two technologies are usually applied in low-speed, high-latency scenarios, such as meter reading and environmental monitoring. Normally, the NB-IoT supports a maximum rate of a few hundred kbps, and the MTC supports a maximum rate of a few Mbps. With the development and popularization of the IoT services, such as video surveillance, smart home, wearable devices and industrial sensor monitoring, the rate of tens to hundred Mbps is usually required, and the requirement for latency is relatively high. Therefore, it is difficult for the MTC and NB-IoT technologies to meet these requirements. On this basis, it has been proposed to design a new terminal type in 5G new radio (NR) as a moderate IoT device. In the existing 3GPP standardization, this new terminal type is called a low-capability terminal, also called a reduced capability UE, a redcap terminal, or a NR-lite. The redcap terminal is named in respect to a normal terminal.

In the related art, in the NR system, an initial BWP is defined. Considering factors such as terminal bandwidth limitations, time division duplexing (TDD) center frequency-alignment and synchronization signal and physical broadcast channel (PBCH) block (SSB) overhead, it is required to configure a separate initial DL BWP for the redcap terminal.

### SUMMARY

In order to overcome the problems existing in related art, the present invention provides a method and device for determining a BWP, and a storage medium.

According to a first aspect of embodiments of the present invention, a method for determining a BWP, applied to a terminal, is provided. The method includes: determining a monitoring occasion for a first BWP, where the first BWP is configured based on a system information block; monitoring the first BWP according to the monitoring occasion.

In an embodiment, the monitoring occasion includes one of or any combination of the following: a random access phase, a connected state phase, an idle state phase and an inactive state phase.

In an embodiment, determining the monitoring occasion for the first BWP includes: obtaining indication information, wherein the indication information is used to indicate the monitoring occasion for the first BWP.

In an embodiment, the indication information includes a configuration signaling, and the configuration signaling is used to configure the first BWP.

In an embodiment, determining the monitoring occasion for the first BWP includes: determining the monitoring occasion for the first BWP according to a predefined rule.

In an embodiment, determining the monitoring occasion for the first BWP according to the predefined rule includes at least one of the following: the first BWP including a control resource set configured by a master information block, and the monitoring occasion including a connected state phase; the first BWP including no control resource set configured by a master information block, and the monitoring occasion including a random access phase; the terminal performing a time division duplexing communication, and the monitoring occasion including at least one of an idle state phase and an inactive state phase; the terminal performing a frequency division duplexing communication, and the monitoring occasion including a connected state phase; the first BWP being configured with no synchronization signal and physical broadcast channel (PBCH) block (SSB), and the monitoring occasion being a random access phase; the first BWP being configured with a random access-based search space type, and the monitoring occasion including a random access phase; the first BWP being configured with a paging search space type and an SSB, and the monitoring occasion including an idle state phase.

According to a second aspect of embodiments of the present invention, a method for determining a BWP, applied to a network device, is provided. The method includes: determining a monitoring occasion for a first BWP, where the first BWP is configured based on a system information block.

In an embodiment, the monitoring occasion includes one of or any combination of the following: a random access phase, a connected state phase, an idle state phase and an inactive state phase.

In an embodiment, the method further includes: sending indication information, where the indication information is used to indicate the monitoring occasion for the first BWP

In an embodiment, the indication information includes a configuration signaling, and the configuration signaling is used to configure the first BWP.

In an embodiment, determining the monitoring occasion for the first BWP includes: determining the monitoring occasion for the first BWP according to a predefined rule.

In an embodiment, determining the monitoring occasion for the first BWP according to the predefined rule includes at least one of the following: the first BWP including a control resource set configured by a master information block, and the monitoring occasion including a connected state phase; the first BWP including no control resource set configured by a master information block, and the monitoring occasion including a random access phase; the terminal performing a time division duplexing communication, and the monitoring occasion including at least one of an idle state phase and an inactive state phase, or including a random access phase; the terminal performing a frequency division duplexing communication, and the monitoring occasion including a connected state phase; the first BWP being configured with no synchronization signal and physical broadcast channel (PBCH) block (SSB), and the monitoring occasion being a random access phase; the first BWP being configured with a random access-based search space type, and the monitoring occasion including a random access phase; the first BWP being configured with a paging search space type and an SSB, and the monitoring occasion including an idle state phase.

According to a third aspect of embodiments of the present invention, an apparatus for determining a BWP is provided, including: a processing unit configured to determine a monitoring occasion for a first BWP, where the first BWP is configured based on a system information block; a monitoring unit configured to monitor the first BWP according to the monitoring occasion.

In an embodiment, the monitoring occasion includes one of or any combination of the following: a random access phase, a connected state phase, an idle state phase and an inactive state phase.

In an embodiment, the apparatus for determining the BWP further includes a receiving unit configured to obtain indication information, where the indication information is used to indicate the monitoring occasion for the first BWP. The processing unit is configured to determine the monitoring occasion for the first BWP according to the indication information.

In an embodiment, the indication information includes a configuration signaling, and the configuration signaling is used to configure the first BWP.

In an embodiment, the processing unit is configured to determine the monitoring occasion for the first BWP according to a predefined rule.

In an embodiment, determining the monitoring occasion for the first BWP according to the predefined rule includes at least one of the following: the first BWP including a control resource set configured by a master information block, and the monitoring occasion including a connected state phase; the first BWP including no control resource set configured by a master information block, and the monitoring occasion including a random access phase; the terminal performing a time division duplexing communication, and the monitoring occasion including at least one of an idle state phase and an inactive state phase; the terminal performing a frequency division duplexing communication, and the monitoring occasion including a connected state phase; the first BWP being configured with no synchronization signal and physical broadcast channel (PBCH) block (SSB), and the monitoring occasion being a random access phase; the first BWP being configured with a random access-based search space type, and the monitoring occasion including a random access phase; the first BWP being configured with a paging search space type and an SSB, and the monitoring occasion including an idle state phase.

According to a fourth aspect of embodiments of the present invention, an apparatus for determining a BWP is provided, including: a processing unit configured to determine a monitoring occasion for a first BWP, where the first BWP is configured based on a system information block.

In an embodiment, the monitoring occasion includes one of or any combination of the following: a random access phase, a connected state phase, an idle state phase and an inactive state phase.

In an embodiment, the apparatus for determining the BWP further includes a sending unit configured to send indication information, where the indication information is used to indicate the monitoring occasion for the first BWP.

In an embodiment, the indication information includes a configuration signaling, and the configuration signaling is used to configure the first BWP.

In an embodiment, the processing unit is configured to determine the monitoring occasion for the first BWP according to a predefined rule.

In an embodiment, determining the monitoring occasion for the first BWP according to the predefined rule includes at least one of the following: the first BWP including a control resource set configured by a master information block, and the monitoring occasion including a connected state phase; the first BWP including no control resource set configured by a master information block, and the monitoring occasion including a random access phase; the terminal performing a time division duplexing communication, and the monitoring occasion including at least one of an idle state phase and an inactive state phase, or including a random access phase; the terminal performing a frequency division duplexing communication, and the monitoring occasion including a connected state phase; the first BWP being configured with no SSB, and the monitoring occasion being a random access phase; the first BWP being configured with a random access-based search space type, and the monitoring occasion including a random access phase; the first BWP being configured with a paging search space type and an S SB, and the monitoring occasion including an idle state phase.

According to a fifth aspect of embodiments of the present invention, a device for determining a BWP is provided, including: a processor; a memory for storing instructions that are executable by the processor. The processor is configured to perform the method in the first aspect or in any embodiment of the first aspect.

According to a sixth aspect of embodiments of the present invention, a device for determining a BWP is provided, including: a processor; a memory for storing instructions that are executable by the processor. The processor is configured to perform the method in the second aspect or in any embodiment of the second aspect.

According to a seventh aspect of embodiments of the present invention, there is provided a storage medium having stored therein instructions that, when executed by a processor of a terminal, cause the terminal to perform the method in the first aspect or in any embodiment of the first aspect.

According to an eighth aspect of embodiments of the present invention, there is provided a storage medium having stored therein instructions that, when executed by a processor of a network device, cause the network device to perform the method in the second aspect or in any embodiment of the second aspect.

The technical solution provided by the embodiments of the present invention have the following beneficial effects. The monitoring occasion for the first BWP based on the system information block configuration is determined, and the first BWP is monitored according to the determined monitoring time, so as to enable the terminal to clearly determine the monitoring occasion for the first BWP based on the system information block configuration.

It is to be understood that both the foregoing general description and the following detailed description are illustrative and explanatory only and are not intended to limit the embodiments of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram of a wireless communication system according to an illustrative embodiment.
FIG. 2 is a flowchart of a method for determining a BWP according to an illustrative embodiment.
FIG. 3 is a flowchart of a method for determining a BWP according to an illustrative embodiment.
FIG. 4 is a flowchart of a method for determining a BWP according to an illustrative embodiment.
FIG. 5 is a flowchart of a method for determining a BWP according to an illustrative embodiment.
FIG. 6 is a flowchart of a method for determining a BWP according to an illustrative embodiment.
FIG. 7 is a block diagram of an apparatus for determining a BWP according to an illustrative embodiment.
FIG. 8 is a block diagram of an apparatus for determining a BWP according to an illustrative embodiment.
FIG. 9 is a block diagram of a device for determining a BWP according to an illustrative embodiment.
FIG. 10 is a block diagram of a device for determining a BWP according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention.

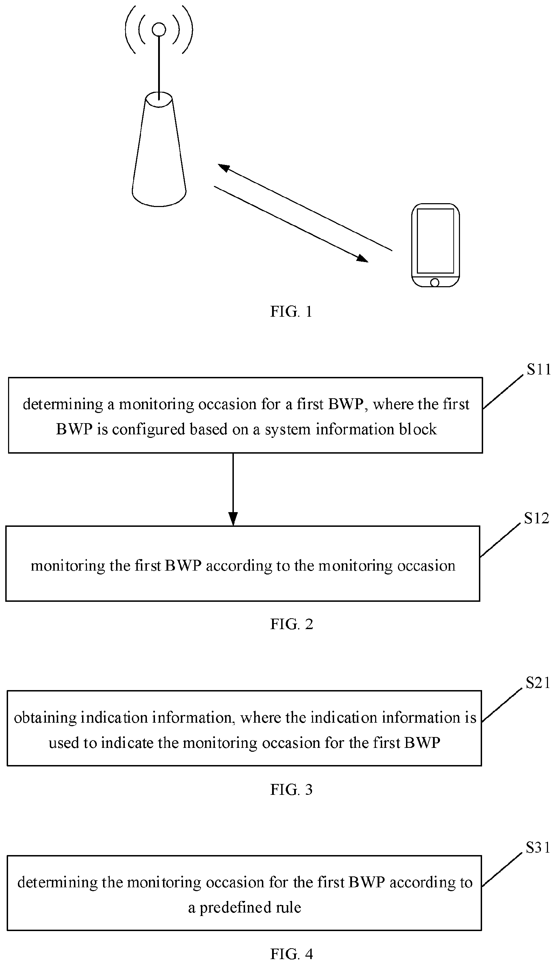

A method for determining a BWP provided by embodiments of the present invention may be applied to a wireless communication system as shown in FIG. 1. Referring to FIG. 1, the wireless communication system includes a terminal and a network device. Information is sent and received between the terminal and the network device through a radio resource.

It can be understood that the wireless communication system shown in FIG. 1 is only for schematic illustration, and the wireless communication system may further include other network devices, such as a core network device, a wireless relay device, and a wireless backhaul device, which are not shown in FIG. 1. The number of network devices and the number of terminals included in the wireless communication system are not limited in the embodiments of the present invention.

It may be further understood that the wireless communication system in the embodiments of the present invention is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be classified into a 2nd generation (2G) network, a 3G network, a 4G network, or a future evolution network, such as a 5G network, which may also be referred to as a new radio (NR) network, according to the capacity, rate, delay and other factors of different networks. For ease of description, the wireless communication network will be sometimes abbreviated as a network in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP) or the like, or may also be a gNB in a NR system, or may also be a component or a part of a device that constitutes a base station, etc. The network device may also be a vehicle-mounted device when it is used in a vehicle to everything (V2X) communication system. It is to be understood that the specific technology and specific device form adopted by the network device are not limited in embodiments of the present invention.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device, a vehicle-mounted device, or the like that has a wireless connection function. At present, some examples of the terminal are a smart phone (a mobile phone), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in embodiments of the present invention.

The terminal involved in the embodiments of the present invention may be understood as a new type of terminal, i.e., a low-capability terminal, designed in the 5G NR. The low-capability terminal is also called a reduced capability UE, or a redcap terminal, or an NR-lite. In the embodiments of the present invention, the new terminal is called the redcap terminal.

Similar to an IoT device in a long term evolution (LTE), the 5G NR-lite usually needs to meet the following requirements of low cost, low complexity; coverage enhancement to some degree; and power saving.

Since the existing NR system is designed for high-end terminals such as high-speed and low-latency terminals, the current design cannot meet the above requirements of the NR-lite. Therefore, the existing NR system needs to be modified to meet the requirements of the NR-lite. For example, in order to meet the requirements of low cost and low complexity, a radio frequency (RF) bandwidth of the NR-IoT is limited, such as to 5M Hz or 10M Hz, or a buffer size of the NR-lite is limited, so as to limit a size of a transmission block received each time. For power saving, a possible optimization is to simplify the communication process, to reduce the number of times the NR-lite terminal detects a downlink control channel.

In the related art, considering factors such as terminal bandwidth limitations, TDD center frequency-alignment and synchronization signal and PBCH block (SSB) overhead, it is required to configure a separate initial DL BWP for the redcap terminal.

Whether the separate initial DL BWP for the redcap terminal needs to be configured is determined based on one or more of a uplink initial bandwidth configured for a non-redcap terminal (UL initial for non-redcap), a downlink initial bandwidth part configured for a non-redcap terminal based on a master information block (MIB-configured initial DL BWP for non-redcap), a downlink initial bandwidth part configured for a non-redcap terminal based on a system information block (SIB-configured initial DL BWP for non-redcap) and a maximum bandwidth of a redcap terminal (redcap's maximum UE BW).

For the convenience of description, it is defined that UL initial for non-redcap=X, MIB-configured initial DL BWP for non-redcap=Y, SIB-configured initial DL BWP for non-redcap=Z, redcap's maximum UE BW=A. The initial DL BWP needs to be configured separately in the following cases.

In Case 1, in response to determining that X<A, Y<A, Z>A, the separate initial DL BWP needs to be configured for the redcap terminal, and this separate initial DL is used for a connected state phase after completing random access (i.e., after initial access).

In Case 2, in response to determining that X>A, Y<A, in the TDD system, it is required to configure the separate initial UL BWP for the redcap terminal, and considering the purpose of the TDD center frequency alignment, it is required to configure an initial DL BWP. The configured initial DL BWP needs to be used in at least a random access phase (i.e., an initial access phase), or used both in the initial access phase and after the initial access phase.

In Case 3, regardless of the relationships between the UE bandwidth and the initial DL/UL BWPs configured by the system, from a perspective of traffic offloading, the separate initial DL BWP needs to be configured for the initial access phase and/or after the initial access.

The related technology supports configuring the initial DL BWP in the SIB, for example, supports configuring the initial DL BWP in SIB1. Moreover, the traditional initial DLBWP based on SIB1 may be multiplexed to configure the separate initial DL BWP for the redcap terminal. However, the initial DL BWP of the traditional SIB1 configuration is preset to take effect only after the initial access phase. However, for the redcap terminal, some configurations need to take effect during the initial access phase, and some configurations need to take effect after the initial access. At this time, how the terminal knows when the configured initial DL BWP takes effect is a problem that needs to be solved. It is understood that the effective occasion involved in the embodiments of the present invention may be understood as a timing when the terminal starts to monitor the BWP, which is hereinafter referred to as a monitoring occasion.

Embodiments of the present invention provide a method for determining a BWP, which determines a BWP monitoring occasion for an SIB-configured DL initial BWP. Hereinafter, the BWP configured based on the SIB is referred to as a first BWP. It can be understood that, in the embodiments of the present invention, the first BWP may be an initial DL BWP, for example, an initial DL BWP configured in SIB1.

FIG. 2 is a flowchart of a method for determining a BWP according to an illustrative embodiment. The method for determining the BWP is applied to a terminal and includes the following steps as shown in FIG. 2.

In S11, a monitoring occasion for a first BWP is determined, where the first BWP is configured based on a system information block.

In S12, the first BWP is monitored according to the monitoring occasion.

In the method for determining the BWP provided by the embodiments of the present invention, the monitoring occasion for the first BWP configured based on the system information block (SIB) is determined, and the first BWP is monitored according to the determined monitoring occasion. In this way, the terminal may clearly know the monitoring occasion for the SIB-configured BWP.

In the embodiments of the present invention, there is one or more monitoring occasions for the first BWP. In other words, it can be understood that in the traditional technology, it only takes effect after the initial access phase, and there is no need for the terminal to determine the monitoring occasion for the first BWP. However, the present invention requires the terminal to determine the monitoring occasion for the first BWP in real time after receiving the SIB, and the first BWP is monitored according to the determined monitoring occasion. For example, the terminal may determine the monitoring occasion to be a phase before the initial access, a phase of the initial access, or a phase of the initial access.

In one embodiment, the monitoring occasion for the first BWP involved in the embodiments of the present invention includes one of or any combination of the following: a random access phase (i.e., an initial access phase), a connected state phase (i.e., a phase after the initial access, or a connected phase), an idle state phase (i.e., an idle phase) and an inactive state phase (i.e., an inactive phase).

In the method for determining the BWP provided in the embodiments of the present invention, the monitoring occasion for the first BWP may be notified based on a signaling, for example, may be indicated by indication information sent by a network device. FIG. 3 shows a flowchart of a method for determining a BWP according to an illustrative embodiment. The method for determining the BWP may be implemented as a separate embodiment, or may be implemented in combination with other embodiments of the present invention. As shown in FIG. 3, the method for determining the BWP is applied to a terminal and includes the following step.

In S21, indication information is obtained, where the indication information is used to indicate the monitoring occasion for the first BWP.

In embodiments of the present invention, the indication information may indicate that the first BWP is used for one or more monitoring occasions of the random access phase, the connected state phase, the idle state phase, and the inactive state phase.

In embodiments of the present invention, the monitoring occasion for the first BWP is configured in a configuration signaling of the first BWP. It may be also understood that the indication information for indicating the monitoring occasion for the first BWP includes the configuration signaling, and the configuration signaling is used to configure the monitoring occasion for the first BWP.

In an example, the indication information for indicating the monitoring occasion for the first BWP may be an indicator added in the configuration signaling, and the indicator indicates the monitoring occasion for the first BWP.

For example, an indicator for indicating the monitoring occasion of the initial DL BWP is added to the signaling for configuring the initial DL BWP, and the indicator indicates that A: the initial DL BWP is used in the random access phase; B: the initial DL BWP is used in the connected state phase; C: the initial DL BWP is used in the inactive state phase, the idle state phase; D: the initial DL BWP is used at least in two phases of the above-mentioned phases, i.e., the random access phase, the connected state phase, and the inactive state phase and the idle state phase. For example, the initial DL BWP is used in the random access phase and the connected state phase, or the initial DL BWP is used in the idle state phase and the random access phase.

In the method for determining the BWP provided by the embodiments of the present invention, the terminal determines the BWP monitoring occasion based on the indication information from the network device, and performs BWP monitoring at the determined monitoring occasion, thus solving the problem of unclear BWP monitoring occasion in related art.

In the method for determining the BWP provided in the embodiments of the present invention, the terminal determines the monitoring occasion for the first BWP based on a predefined rule. FIG. 4 shows a flowchart of a method for determining a BWP according to an illustrative embodiment. The method for determining the BWP may be implemented as a separate embodiment, or may be implemented in combination with other embodiments of the present invention. As shown in FIG. 4, the method for determining the BWP is applied to the terminal and includes the following step.

In S31, the monitoring occasion for the first BWP is determined according to a predefined rule.

The predefined rule used to determine the monitoring occasion for the first BWP in the embodiments of the present invention may be determined based on configuration information of the first BWP, a communication mechanism adopted by the terminal, a communication standard, or any combination thereof.

When determining the monitoring occasion for the first BWP based on the configuration information of the first BWP, it may be determined based on one or more of whether the first BWP includes control information configured by a master information block (MIB), whether a synchronization signal and PBCH block (SSB) is configured in the first BWP, or a search space (SS) type configured in the first BWP.

In an embodiment of the present invention, the monitoring occasion for the first BWP is determined based on whether the first BWP includes MIB-configured control information.

The MIB-configured control information may be a control resource set#0 (CORESET#0). For example, in an embodiment of the present invention, the monitoring occasion for the first BWP may be determined based on whether the first BWP includes an MIB-configured control resource set#0 (i.e., an MIB-configured CORESET#0).

The MIB-configured CORESET#0 is usually for the BWP used by the non-redcap terminal (i.e., the normal terminal) in the random access process. In an implementation manner of the embodiments of the present invention, the BWP configured with the MIB-configured CORESET#0 may be multiplexed.

In an embodiment, the first BWP includes the MIB-configured CORESET#0, and the monitoring occasion for the first BWP includes a connected state phase (that is, after the random access phase). In another embodiment, the first BWP does not include MIB-configured CORESET#0, and the monitoring occasion for the first BWP includes the random access phase.

In embodiments of the present invention, the monitoring occasion for the first BWP is determined based on whether the SSB is configured in the first BWP.

In an embodiment of the present invention, no SSB is configured in the first BWP, and the monitoring occasion for the first BWP is the random access phase. In another embodiment, the SSB is configured in the first BWP, and the monitoring occasion for the first BWP may include one or more of the connected state phase, the idle state phase, and the inactive state phase, so as to provide SSB-related information required in the idle state phase, the paging phase, and/or the connected state phase.

In embodiments of the present invention, the monitoring occasion for the first BWP is determined based on the SS type configured in the first BWP.

In an embodiment of the present invention, the first BWP is configured with a random access-based search space (i.e., a random access channel-based common search space, RACH CSS), and the monitoring occasion includes the random access phase. In another embodiment, the first BWP is configured with a paging search space (i.e., a paging CSS) and an SSB, and the monitoring occasion includes an idle state phase.

It can be understood that the manner of determining the monitoring occasion for the first BWP according to the SS type configured in the first BWP in the embodiments of the present invention may be understood as a way of implicitly determining the monitoring occasion for the BWP.

In embodiments of the present invention, the monitoring occasion for the first BWP is determined according to the communication mechanism used by the terminal. In a possible implementation manner, in response to the terminal performing a TDD communication, the monitoring occasion includes at least one of the idle state phase and the inactive state phase, or includes the random access phase, so as to meet the requirement of the TDD center frequency-alignment. In another possible implementation manner, in response to the terminal performing a frequency division duplexing (FDD) communication, the monitoring occasion includes the connected state phase.

In the method for determining the BWP provided in the embodiments of the present invention, the terminal determines the monitoring occasion for the first BWP based on the defined rule and monitors the BWP at the determined monitoring occasion, and thus clarifies the BWP monitoring occasion, and the BWP is determined in a manner of multiplexing the SIB1 configured initial DL BWP.

Based on the same concept, the embodiments of the present invention further provides a method for determining a BWP, applied to a network device.

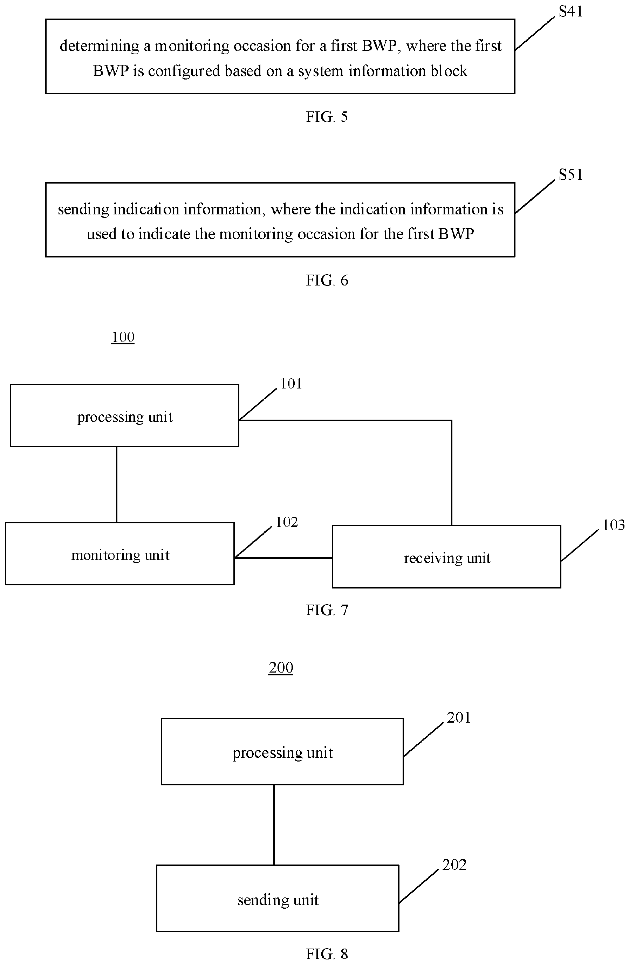

FIG. 5 shows a flowchart of a method for determining a BWP according to an illustrative embodiment. The method for determining the BWP may be implemented as a separate embodiment, or may be implemented in combination with other embodiments of the present invention. As shown in FIG. 5, the method for determining the BWP is applied to a network device and includes the following step.

In S41, a monitoring occasion for a first BWP is determined, where the first BWP is configured based on the system information block.

In one embodiment, the monitoring occasion for the first BWP involved in the embodiments of the present invention includes one of or any combination of the following: a random access phase (i.e., an initial access phase), a connected state phase (i.e., a phase after the initial access, or a connected phase), an idle state phase (i.e., an idle phase) and an inactive state phase (i.e., an inactive phase).

In response to determining the monitoring occasion for the first BWP, the network device may correspondingly enable the terminal to determine the monitoring occasion for the first BWP in an appropriate manner, so as to monitor the first BWP.

FIG. 6 is a flowchart of a method for determining a BWP according to an illustrative embodiment. The method for determining the BWP may be implemented as a separate embodiment, or may be implemented in combination with other embodiments of the present invention. As shown in FIG. 6, the method for determining the BWP is applied to the network device and includes the following step.

In S51, indication information is sent, where the indication information is used to indicate the monitoring occasion for the first BWP.

In embodiments of the present invention, the indication information may indicate that the first BWP is used for one or more monitoring occasions of the random access phase, the connected state phase, the idle state phase, and the inactive state phase.

In an embodiment of the present invention, the monitoring occasion for the first BWP is configured in a configuration signaling of the first BWP. It may be also understood that the indication information for indicating the monitoring occasion for the first BWP includes the configuration signaling, and the configuration signaling is used to configure the monitoring occasion for the first BWP.

In an example, the indication information for indicating the monitoring occasion for the first BWP may be an indicator added in the configuration signaling, and the indicator indicates the monitoring occasion for the first BWP.

For example, an indicator for indicating the monitoring occasion of the initial DL BWP is added to the signaling for configuring the initial DL BWP, and the indicator indicates that A: the initial DL BWP is used in the random access phase; B: the initial DL BWP is used in the connected state phase; C: the initial DL BWP is used in the inactive state phase, the idle state phase; D: the initial DL BWP is used at least in two phases of the above-mentioned phases, i.e., the random access phase, the connected state phase, and the inactive state phase and the idle state phase. For example, the initial DL BWP is used in the random access phase and the connected state phase, or the initial DL BWP is used in the idle state phase and the random access phase.

In this way, after the network device sends the indication information, the terminal determines the monitoring occasion.

In the method for determining the BWP provided by the embodiments of the present invention, the network device sends the indication information for indicating the BWP monitoring occasion to the terminal to allow the terminal to determine the BWP monitoring occasion and perform the BWP monitoring at the determined monitoring occasion, and the network device communicates with the terminal based on the determined monitoring occasion, thus solving the problem of unclear BWP monitoring occasion in related art.

In a further embodiment, the monitoring occasion for the first BWP is determined according to a predefined rule.

In an example, determining the monitoring occasion for the first BWP according to the predefined rule includes at least one of the following.
A: the first BWP includes a control resource set configured by a master information block, and the monitoring occasion includes a connected state phase.
B: the first BWP includes no control resource set configured by a master information block, and the monitoring occasion includes a random access phase.
C: the terminal performs a TDD communication, that is, the network device is communicated with the terminal based on the TDD or the network device determines that the terminal performs the TDD communication, and the monitoring occasion includes at least one of an idle state phase and an inactive state phase, or includes a random access phase.
D: the terminal performs an FDD communication, that is, the network device is communicated with the terminal based on the FDD or the network device determines that the terminal performs the FDD communication, and the monitoring occasion includes a connected state phase.
E: the first BWP is configured with no SSB, and the monitoring occasion is a random access phase.
F: the first BWP is configured with a RACH CSS, and the monitoring occasion includes a random access phase.
G: the first BWP is configured with a paging CSS and an SSB, and the monitoring occasion includes an idle state phase.

In this way, after the network device sends the first BWP configuration, the terminal determines the monitoring occasion correspondingly.

It can be understood that the method for determining the BWP performed by the network device in the embodiments of the present invention corresponds to the method for determining the BWP performed by the terminal in the above embodiments, details of the method for determining the BWP performed by the network device may be referred to the embodiments of the method for determining the BWP performed by the terminal, and thus will not be described here.

It can be further understood that the method for determining the BWP provided by the embodiments of the present invention may be applicable to a scenario where the terminal interacts with the network device to implement the BWP determination. The functions realized by the terminal and network device involved in the specific implementation process may refer to the relevant descriptions for the above embodiments, and will not be described in detail here.

It should be noted that those skilled in the art understand that the various implementations/examples may be used in combination with any of the above embodiments, or may be used separately. No matter the implementations/examples are used in combination with the above embodiments or used separately, the implementation principles thereof are similar. In the present invention, some embodiments are described in the manner of being used together. Those skilled in the art can understand that such a combination of embodiments is not a limitation to the present invention.

Based on the same concept, embodiments of the present invention further provide a BWP device/apparatus.

It can be understood that, in order to realize the above functions, the BWP device/apparatus provided in the embodiments of the present invention includes corresponding hardware structure(s) and/or software module(s) for performing various functions. Considering units and algorithm steps of individual examples disclosed in the embodiments of the present invention, the embodiments of the present invention may be implemented in a form of hardware or a combination of hardware and computer software. Whether a certain function is executed by hardware or computer software-driven hardware depends on a specific application and a design constraint of a technical solution. Those skilled in the art may use different methods to implement the described functions for specific applications, and such implementations should not be regarded as exceeding the scope of the technical solution of the embodiments of the present invention.

FIG. 7 is a block diagram of an apparatus for determining a BWP according to an illustrative embodiment. A BWP apparatus 100 is applied to a terminal and includes a processing unit 101 and a monitoring unit 102 as shown in FIG. 7.

The processing unit 101 is configured to determining a monitoring occasion for a first BWP, where the first BWP is configured based on a system information block. The monitoring unit 102 is configured to monitor the first BWP according to the monitoring occasion.

In an embodiment, the monitoring occasion includes one of or any combination of the following: a random access phase, a connected state phase, an idle state phase and an inactive state phase.

In an embodiment, the apparatus 100 for determining the BWP further includes a receiving unit 103 configured to obtain indication information, where the indication information is used to indicate the monitoring occasion for the first BWP. The processing unit 101 is configured to determine the monitoring occasion for the first BWP according to the indication information.

In an embodiment, the indication information includes a configuration signaling, and the configuration signaling is used to configure the first BWP.

In an embodiment, the processing unit 101 is configured to determine the monitoring occasion for the first BWP according to a predefined rule.

In an embodiment, determining the monitoring occasion for the first BWP according to the predefined rule includes at least one of the following: the first BWP including a control resource set configured by a master information block, and the monitoring occasion including a connected state phase; the first BWP including no control resource set configured by a master information block, and the monitoring occasion including a random access phase; the terminal performing a time division duplexing communication, and the monitoring occasion including at least one of an idle state phase and an inactive state phase; the terminal performing a frequency division duplexing communication, and the monitoring occasion including a connected state phase; the first BWP being configured with no synchronization signal and physical broadcast channel (PBCH) block (SSB), and the monitoring occasion being a random access phase; the first BWP being configured with a random access-based search space type, and the monitoring occasion including a random access phase; the first BWP being configured with a paging search space type and an SSB, and the monitoring occasion including an idle state phase.

FIG. 8 is a block diagram of an apparatus for determining a BWP according to an illustrative embodiment. An apparatus 200 for determining a BWP is applied to a network device and includes a processing unit 201 as shown in FIG. 8.

The processing unit 201 is configured to determine a monitoring occasion for a first BWP, where the first BWP is configured based on a system information block.

In an embodiment, the monitoring occasion includes one of or any combination of the following: a random access phase, a connected state phase, an idle state phase and an inactive state phase.

In an embodiment, the apparatus 200 for determining the BWP further includes a sending unit 202 configured to send indication information, where the indication information is used to indicate the monitoring occasion for the first BWP.

In an embodiment, the indication information includes a configuration signaling, and the configuration signaling is used to configure the first BWP.

In an embodiment, the processing unit 201 is configured to determine the monitoring occasion for the first BWP according to a predefined rule.

In an embodiment, determining the monitoring occasion for the first BWP according to the predefined rule includes at least one of the following: the first BWP including a control resource set configured by a master information block, and the monitoring occasion including a connected state phase; the first BWP including no control resource set configured by a master information block, and the monitoring occasion including a random access phase; the terminal performing a time division duplexing communication, and the monitoring occasion including at least one of an idle state phase and an inactive state phase, or including a random access phase; the terminal performing a frequency division duplexing communication, and the monitoring occasion including a connected state phase; the first BWP being configured with no SSB, and the monitoring occasion being a random access phase; the first BWP being configured with a random access-based search space type, and the monitoring occasion including a random access phase; the first BWP being configured with a paging search space type and an S SB, and the monitoring occasion including an idle state phase.

Regarding the apparatus in the foregoing embodiments, specific manners in which individual modules execute operations have been described in detail in the embodiments related to the method, and will not be described in detail here.

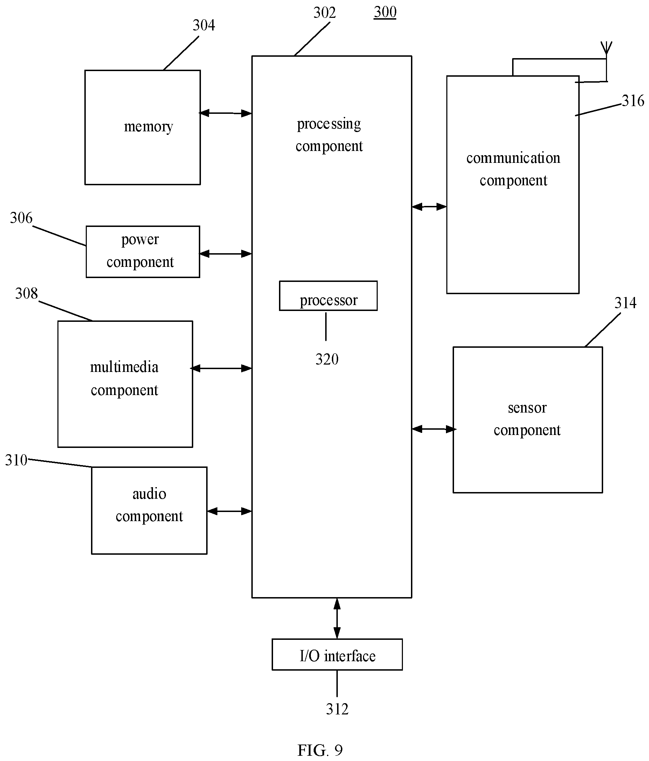

FIG. 9 is a block diagram of a device for determining a BWP according to an illustrative embodiment. A device 300 for determining a BWP may be the terminal provided in the above embodiments. For example, the device 300 may be a mobile phone, a computer, a digital broadcast terminal, a messaging device, a game console, a tablet device, a medical device, a fitness device, a personal digital assistant, or the like.

Referring to FIG. 9, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the device 300 may be implemented with one or more of an application specific integrated circuits (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

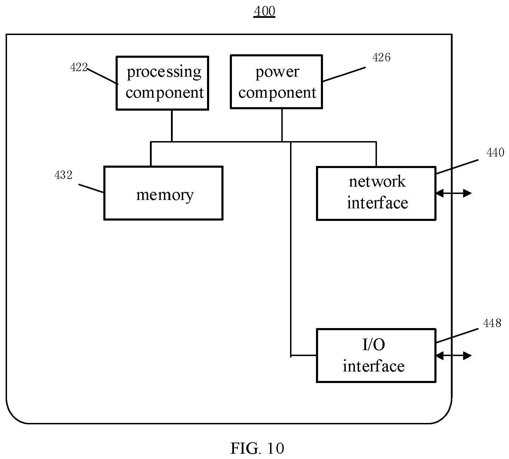

FIG. 10 is a block diagram of a device for determining a BWP according to an illustrative embodiment. For example, a device 400 for determining a BWP may be provided as a network device. Referring to FIG. 10, the device 400 includes a processing component 422, which further includes one or more processors, and memory resources represented by a memory 432 for storing instructions executable by the processing component 422, such as an application program. The application program stored in the memory 432 may include one or more modules each corresponding to a set of instructions. In addition, the processing component 422 is configured to execute instructions to perform the above-mentioned method.

The device 400 may further include a power component 426 configured to perform power management of the device 400, a wired or wireless network interface 440 configured to connect the device 400 to a network, and an input/output (I/O) interface 448. The device 400 may operate based on an operating system stored in the memory 432, such as Windows ServerTM, Mac OS XTM, UnixTM, LinuxTM, FreeBSDTM, or the like.

In an illustrative embodiment, there is also provided a storage medium including instructions, such as included in the memory 432, executable by the processing component 422 in the device 400, for completing the above-mentioned method. For example, the non-transitory computer-readable storage medium may be a ROM, a random access memory (RAM), a CD-ROM, a magnetic tape, a floppy disc, an optical data storage device, and the like

It is further understood that "a plurality of' in this disclosure refers to two or more, and other quantifiers are similar thereto. The term "and/or" describes an associated relationship of associated objects, and means that there may be three relationships. For example, the expression of A and/or B indicates three cases, i.e., A exists alone, A and B exist at the same time, and B exists alone. The character "/" generally indicates that contextual objects are in an "or" relationship. Terms "a/an", "said", and "the" in singular forms are intended to include plural forms, unless clearly indicated in the context otherwise.

It is further understood that terms such as "first" and "second" are used to describe various information, but these information should not be limited by these terms. These terms are only used for distinguishing information of the same type from each other and do not denote a particular order or degree of importance. As a matter of fact, the terms such as "first" and "second" may be used interchangeably. For example, first information may also be referred to as second information, and similarly, the second information may also be referred to as the first information, without departing from the scope of embodiments of the present invention.

It is further understood that although operations in embodiments of the present invention are described in a specific order in the accompanying drawings, it should not be understood that these operations are required to be performed in the specific order shown or in a serial order, or that all of the operations shown are required to be performed to obtain desired results. In certain circumstances, multitasking and parallel processing may be advantageous.

Other embodiments of the present invention will be apparent to those skilled in the art from consideration of the specification and practice of the present invention disclosed here. The present invention is intended to cover variations, uses, or adaptations of the present invention, and the variations, uses, or adaptations of the present invention are in line with the general principles of the present invention and include the common knowledge or customary practice in the art.

It will be appreciated that the present invention is not limited to the exact construction that has been described above and illustrated in the accompanying drawings, and that various modifications and changes can be made without departing from the scope thereof. The scope of the present invention is limited by the appended claim scopes only.

## Claims

1. A method for determining a bandwidth part, BWP, applied to a terminal, the method comprising:
determining a monitoring occasion for a first BWP, wherein the first BWP is configured based on a system information block;
monitoring the first BWP according to the monitoring occasion.

2. The method according to claim 1, wherein the monitoring occasion comprises one of or any combination of the following: a random access phase, a connected state phase, an idle state phase and an inactive state phase.

3. The method according to claim 1 or 2, wherein determining the monitoring occasion for the first BWP comprises:
obtaining indication information, wherein the indication information is used to indicate the monitoring occasion for the first BWP.

4. The method according to claim 3, wherein the indication information comprises a configuration signaling, and the configuration signaling is used to configure the first BWP.

5. The method according to claim 1 or 2, wherein determining the monitoring occasion for the first BWP comprises:
determining the monitoring occasion for the first BWP according to a predefined rule.

6. The method according to claim 5, wherein determining the monitoring occasion for the first BWP according to the predefined rule comprises at least one of the following:
the first BWP comprising a control resource set configured by a master information block, and the monitoring occasion comprising a connected state phase;
the first BWP comprising no control resource set configured by a master information block, and the monitoring occasion comprising a random access phase;
the terminal performing a time division duplexing communication, and the monitoring occasion comprising at least one of an idle state phase and an inactive state phase;
the terminal performing a frequency division duplexing communication, and the monitoring occasion comprising a connected state phase;
the first BWP being configured with no synchronization signal and physical broadcast channel block, SSB, and the monitoring occasion being a random access phase;
the first BWP being configured with a random access-based search space type, and the monitoring occasion comprising a random access phase;
the first BWP being configured with a paging search space type and an SSB, and the monitoring occasion comprising an idle state phase.

7. A method for determining a BWP, applied to a network device, the method comprising:
determining a monitoring occasion for a first BWP, wherein the first BWP is configured based on a system information block.

8. The method for determining the BWP according to claim 7, wherein the monitoring occasion comprises one of or any combination of the following: a random access phase, a connected state phase, an idle state phase and an inactive state phase.

9. The method for determining the BWP according to claim 7 or 8, wherein the method further comprises:
sending indication information, wherein the indication information is used to indicate the monitoring occasion for the first BWP.

10. The method for determining the BWP according to claim 9, wherein the indication information comprises a configuration signaling, and the configuration signaling is used to configure the first BWP

11. The method according to claim 7 or 8, wherein determining the monitoring occasion for the first BWP comprises:
determining the monitoring occasion for the first BWP according to a predefined rule.

12. The method according to claim 11, wherein determining the monitoring occasion for the first BWP according to the predefined rule comprises at least one of the following:
the first BWP comprising a control resource set configured by a master information block, and the monitoring occasion comprising a connected state phase;
the first BWP comprising no control resource set configured by a master information block, and the monitoring occasion comprising a random access phase;
the terminal performing a time division duplexing communication, and the monitoring occasion comprising at least one of an idle state phase and an inactive state phase, or comprising a random access phase;
the terminal performing a frequency division duplexing communication, and the monitoring occasion comprising a connected state phase;
the first BWP being configured with no synchronization signal and physical broadcast channel block, SSB, and the monitoring occasion being a random access phase;
the first BWP being configured with a random access-based search space type, and the monitoring occasion comprising a random access phase;
the first BWP being configured with a paging search space type and an SSB, and the monitoring occasion comprising an idle state phase.

13. An apparatus for determining a BWP, comprising:
a processing unit configured to determine a monitoring occasion for a first BWP, wherein the first BWP is configured based on a system information block;
a monitoring unit configured to monitor the first BWP according to the monitoring occasion.

14. The apparatus according to claim 13, wherein the monitoring occasion comprises one of or any combination of the following: a random access phase, a connected state phase, an idle state phase and an inactive state phase.

15. An apparatus for determining a BWP, comprising:
a processing unit configured to determine a monitoring occasion for a first BWP, wherein the first BWP is configured based on a system information block.

16. The apparatus according to claim 15, wherein the monitoring occasion comprises one of or any combination of the following: a random access phase, a connected state phase, an idle state phase and an inactive state phase.

17. A device for determining a BWP, comprising:
a processor;
a memory for storing instructions that are executable by the processor;
wherein the processor is configured to perform the method according to any one of claims 1 to 6.

18. A device for determining a BWP, comprising:
a processor;
a memory for storing instructions that are executable by the processor;
wherein the processor is configured to perform the method according to any one of claims 7 to 12.

19. A storage medium having stored therein instructions that, when executed by a processor of a terminal, cause the terminal to perform the method according to any one of claims 1 to 6.

20. A storage medium having stored therein instructions that, when executed by a processor of a network device, cause the network device to perform the method according to any one of claims 7 to 12.
